# EUROPEAN PATENT APPLICATION

(11) **EP 4 160 104 A1**
(43) Date of publication of application: **05.04.2023**
(21) Application number: 20938754.7
(22) Date of filing: 02.06.2020
(51) Int. Cl.: F24F 11/74, F24F 120/12

(54) **ENVIRONMENT CONTROL SYSTEM**

(71) Applicant: MITSUBISHI ELECTRIC CORPORATION, Chiyoda-ku Tokyo 100-8310 (JP)
(72) Inventor: HARAMAKI, Marika, Tokyo 100-8310 (JP); ORITO, Mari, Tokyo 100-8310 (JP); FUSHIE, Ryo, Tokyo 100-8310 (JP); HISANO, Kohei, Tokyo 100-8310 (JP); MINEZAWA, Satoshi, Tokyo 100-8310 (JP); FURUHASHI, Takuya, Tokyo 100-8310 (JP)
(74) Representative: Pfenning, Meinig & Partner mbB
(86) International application number: PCT/JP2020/021818
(87) International publication number: WO 2021/245804

(57) **Abstract**

An environmental control system includes an air conditioner body (1), a human body detector for detecting a human body, and a system controller for controlling the air conditioner body (1). The system controller executes a first control when a distance from a human body detected by the human body detector to the air conditioner body (1) is a first distance, and executes a second control when a distance from a human body detected by the human body detector to the air conditioner body (1) is a second distance larger than the first distance. The air conditioner body (1) blows air from one of the air outlets 20 toward the human body detected by the human body detector when the first control is executed, and blows air from at least two air outlets (20) toward a human body detected by the human body detector when the second control is executed.

## Description

### Field

The present disclosure relates to an environmental control system.

### Background

An environmental control system is disclosed in PTL 1. The environmental control system disclosed in PTL 1 uses an environment forming device such as an electric fan or an air conditioner configured to form an airflow to direct the airflow toward a worker, thereby improving the work efficiency of the worker.

### Citation List

### Patent Literature

[PTL 1] JP 2016-171840 A

### Summary

### Technical Problem

In the technique disclosed in PTL 1 described above, in the case where a worker is located away from the environment forming device configured to form an airflow, it is difficult to direct an airflow of a sufficient strength toward the worker. In the technique disclosed in PTL 1 described above, in the case where a worker is located away from the environment forming device, the effect of improving the work efficiency cannot be sufficiently obtained.

The present disclosure has been made in order to solve the problems described above. An object of the present disclosure is to provide an environmental control system that can reliably achieve the effect of improving the work efficiency of a worker. Solution to Problem

An environmental control system according to the present disclosure comprises a first air conditioner body having a plurality of air outlets, a human body detector for detecting a human body, and a system controller for controlling the first air conditioner body. The system controller executes a first control when a distance from a human body detected by the human body detector to the first air conditioner body is a first distance, and executes a second control when a distance from a human body detected by the human body detector to the first air conditioner body is a second distance larger than the first distance. The first air conditioner body blows air from one of the air outlets toward the human body detected by the human body detector when the first control is executed, and blows air from at least two of the air outlets toward the human body detected by the human body detector when the second control is executed.

In addition, an environmental control system according to the present disclosure comprises a first air conditioner body having a plurality of air outlets, and one fan for sending an airflow to the plurality of air outlets, a human body detector for detecting a human body, and a system controller for controlling the first air conditioner body. The system controller executes a first control when a distance from a human body detected by the human body detector to the first air conditioner body is a first distance, and executes a second control when a distance from a human body detected by the human body detector to the first air conditioner body is a second distance larger than the first distance. The first air conditioner body blows air at a first airflow speed toward the human body detected by the human body detector when the first control is executed, and closes at least one of the air outlets and blows air at a second airflow speed toward the human body detected by the human body detector, the second airflow speed being greater than the first airflow speed, when the second control is executed.

In addition, an environmental control system according to the present disclosure comprises a first air conditioner body, a second air conditioner body, a human body detector for detecting a human body, and a system controller for controlling the first air conditioner body and the second air conditioner body. The system controller executes a first control when a distance from a human body detected by the human body detector to the first air conditioner body is a first distance, and executes a second control when a distance from a human body detected by the human body detector to the first air conditioner body is a second distance larger than the first distance. The first air conditioner body blows air toward the human body detected by the human body detector when the first control is executed, and the first air conditioner body and the second air conditioner body blow air toward the human body detected by the human body detector when the second control is executed.

Furthermore, an environmental control system according to the present disclosure comprises a first air conditioner body capable of blowing air toward a first area, a second air conditioner body capable of blowing air toward a second area different from the first area, a human body detector for detecting human bodies that are present in the first area and the second area, and a system controller for controlling the first air conditioner body and the second air conditioner body according to the number of human bodies in the first area and the number of human bodies in the second area, the human bodies being detected by the human body detector. The system controller causes the first air conditioner body and the second air conditioner body to blow air toward the human body in the first area when the number of human bodies in the first area is equal to or larger than a reference value and the number of human bodies in the second area is less than a reference value.

### Advantageous Effects of Invention

The environmental control according to the present disclosure can reliably achieve the effect of improving the work efficiency of a worker.

### Brief Description of Drawings

[Fig. 1]

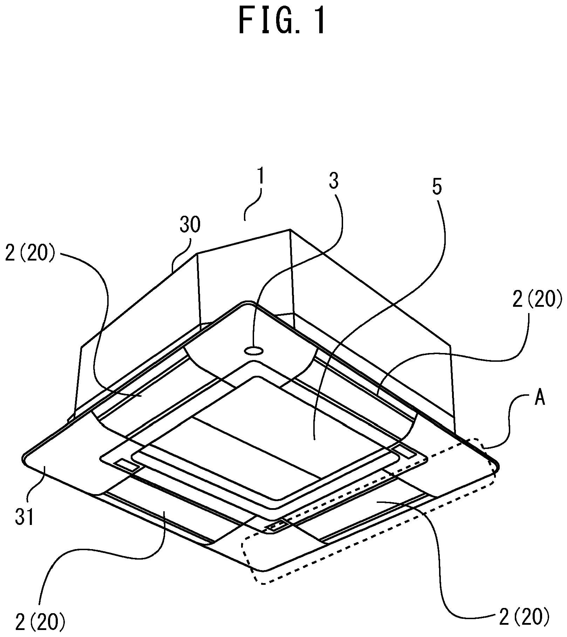

   Fig. 1 is a perspective view of an air conditioner body comprising an air conditioner constituting an environmental control system of Embodiment 1.
[Fig. 2]

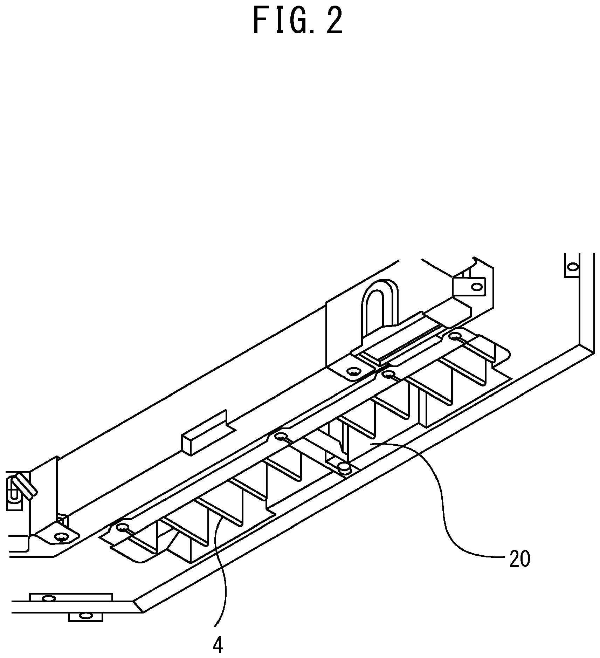

   Fig. 2 is diagram illustrating an internal structure of a louver included in the air conditioner body of Embodiment 1.
[Fig. 3]

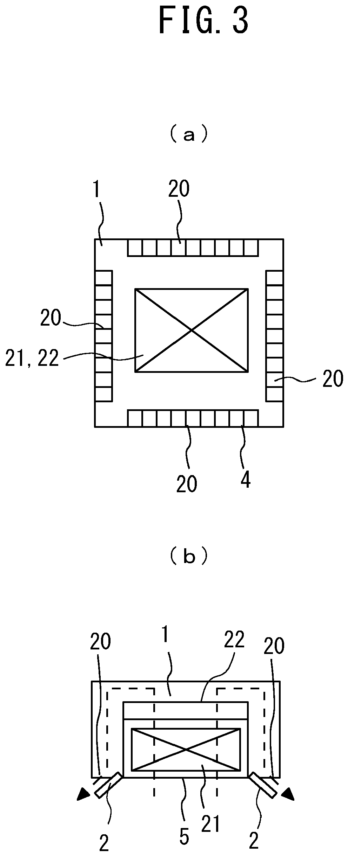

   Fig. 3 is a diagram schematically illustrating a configuration of the air conditioner body of Embodiment 1.
[Fig. 4]

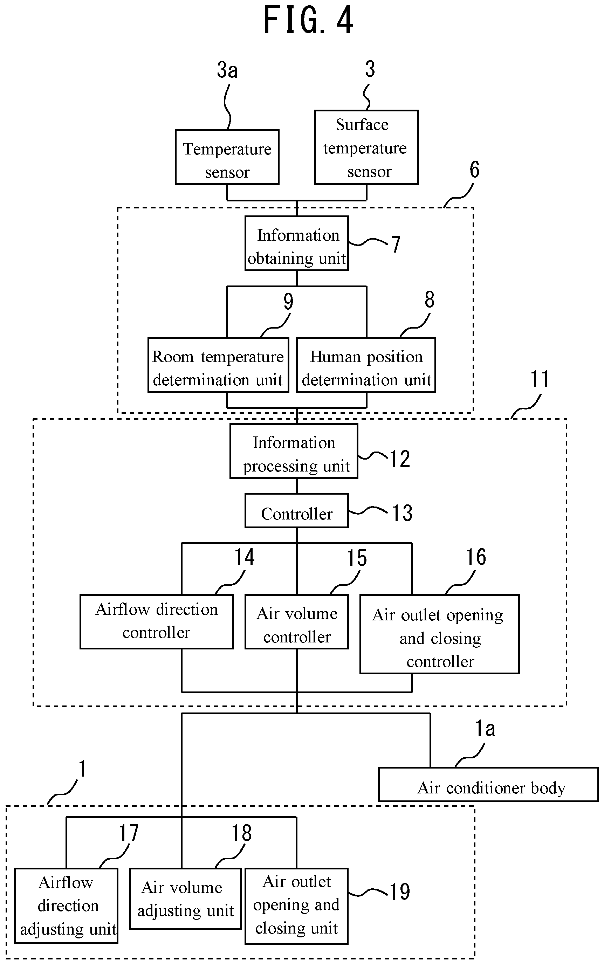

   Fig. 4 is a block diagram illustrating a control system of the environmental control system of Embodiment 1.
[Fig. 5]

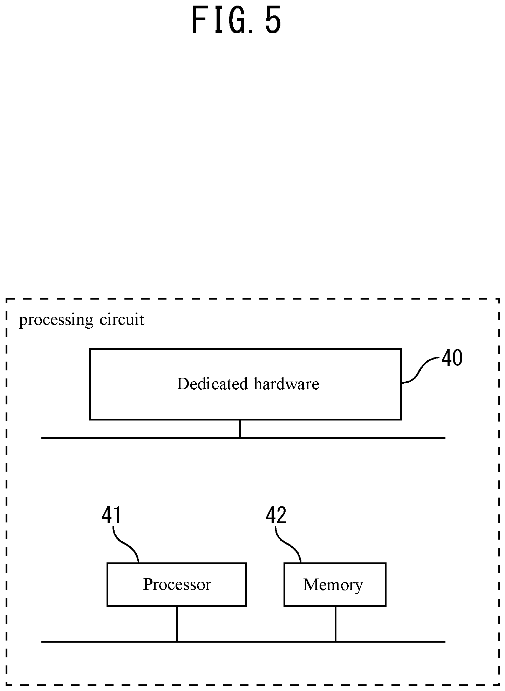

   Fig. 5 is a diagram illustrating an example of a configuration for implementing functions of a system controller according to the present disclosure.
[Fig. 6]

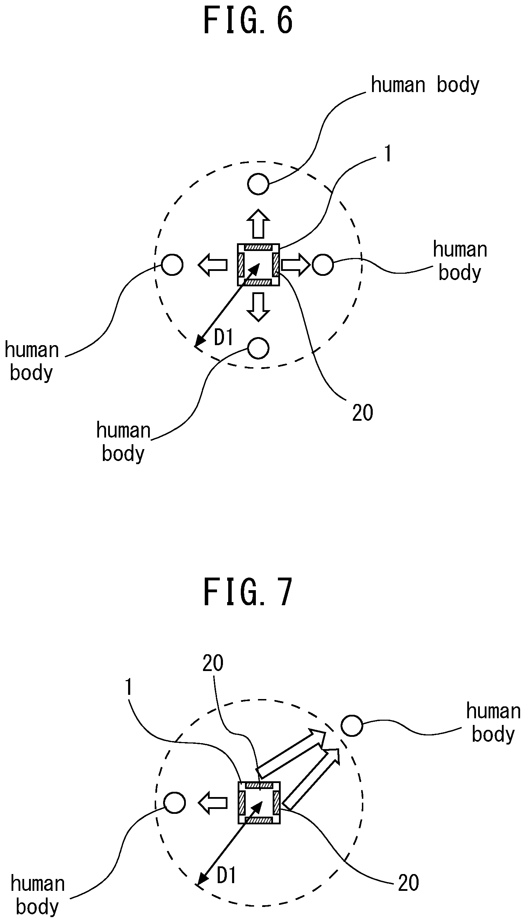

   Fig. 6 is diagram illustrating a first operation of the air conditioner body of Embodiment 1.
[Fig. 7]
   Fig. 7 is diagram illustrating a second operation of the air conditioner body of Embodiment 1.
[Fig. 8]

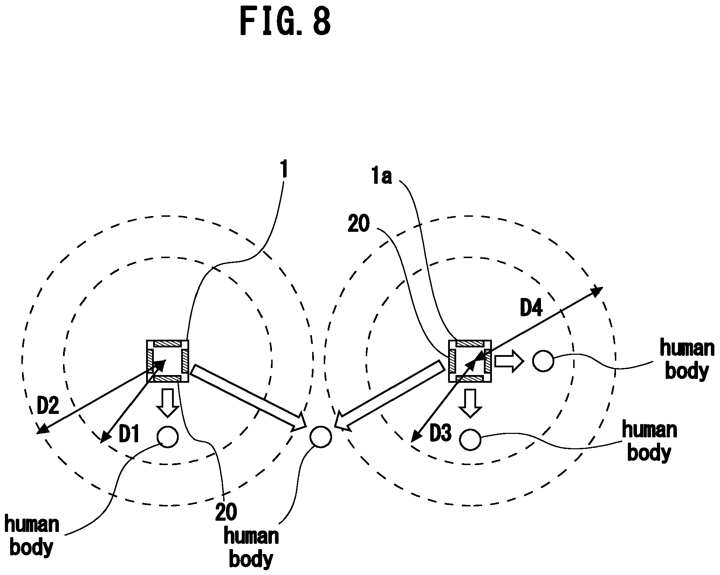

   Fig. 8 is a diagram illustrating a first variant of the environmental control system of Embodiment 1.
[Fig. 9]

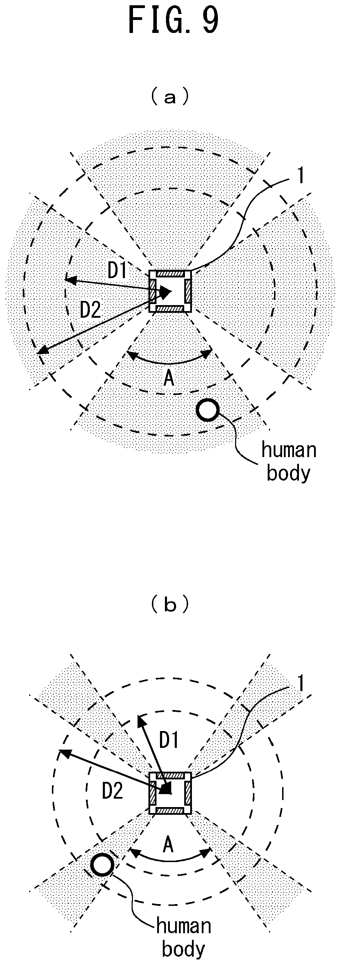

   Fig. 9 is a diagram illustrating a second variant of the environmental control system of Embodiment 1.
[Fig. 10]

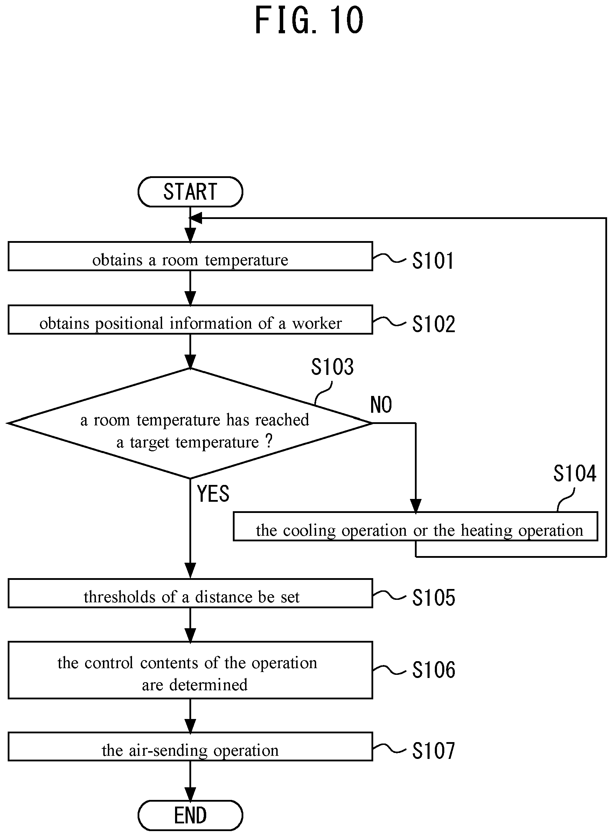

   Fig. 10 is a flowchart illustrating an operation example of the environmental control system of Embodiment 1.
[Fig. 11]

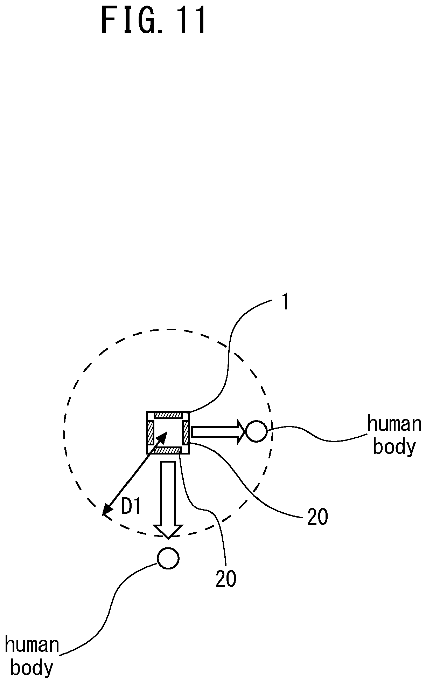

   Fig. 11 is a diagram illustrating an operation of an environmental control system of Embodiment 2.
[Fig. 12]

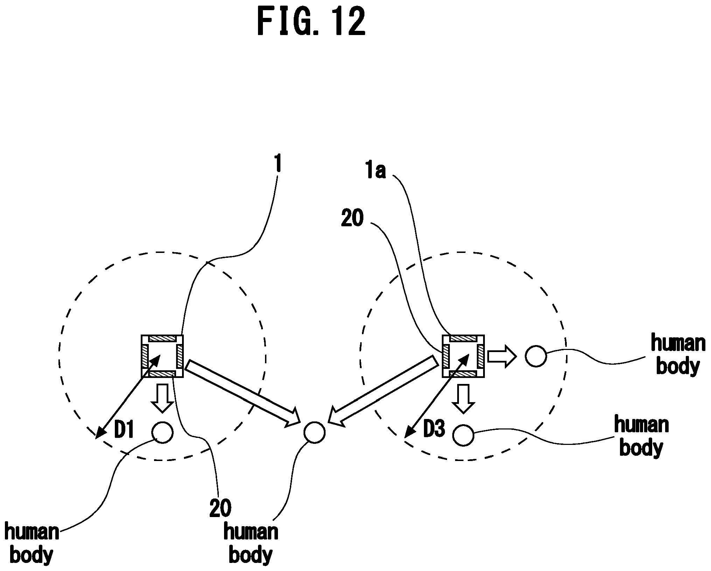

   Fig. 12 is a diagram illustrating an operation of an environmental control system of Embodiment 3.
[Fig. 13]

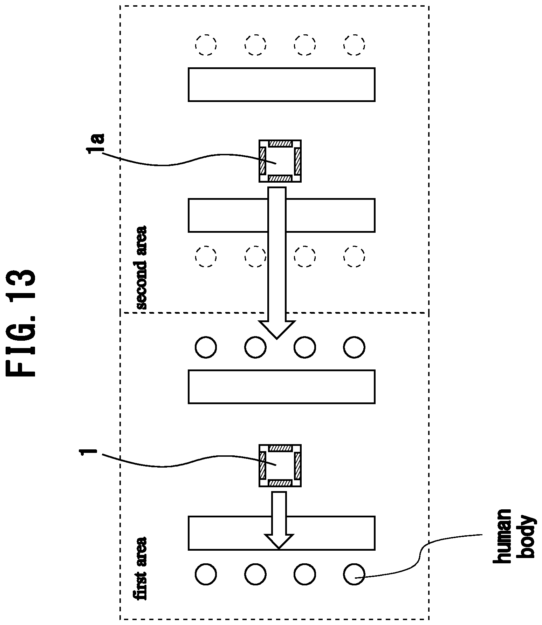

   Fig. 13 is a diagram illustrating an operation of an environmental control system of Embodiment 4.

### Description of Embodiments

Hereinafter, embodiments will be described with reference to the accompanying drawings. The same reference numerals in the drawings indicate the same or corresponding portions. In addition, in the present disclosure, redundant descriptions are simplified or omitted as appropriate. Note that the present disclosure is not limited to the following embodiments. The present disclosure may include various variants and combinations of configurations disclosed by the following embodiments without departing from the gist thereof.

### Embodiment 1.

An environmental control system according to the present embodiment sends air to a user in a target area to thereby suppress a reduction in the work efficiency of the user or improve the work efficiency of the user. The environmental control system according to the present embodiment includes an air conditioner capable of sending air into a target area. Note that the environmental control system according to the present disclosure may be constituted by only an air conditioner or may be constituted by an air conditioner and an external device cooperating with the air conditioner.

Fig. 1 is a perspective view of an air conditioner body 1 comprising an air conditioner constituting an environmental control system of Embodiment 1. Fig. 2 is a diagram illustrating an internal structure of a louver included in the air conditioner body 1 of Embodiment 1. Fig. 2 illustrates the internal structure of a portion A enclosed by a broken line in Fig. 1. Fig. 3 is a diagram schematically illustrating a configuration of the air conditioner body 1 of Embodiment 1. Fig. 3(a) is a plan view schematically illustrating a configuration of the air conditioner body 1 of Embodiment 1. Fig. 3(b) is a side view schematically illustrating a configuration of the air conditioner body 1 of Embodiment 1.

The air conditioner body 1 is a device also referred to as an "indoor unit." The air conditioner body 1 is mounted in a ceiling surface of a room in which a space serving as a target area is formed, for example. The air conditioner body 1 corresponds to a first air conditioner body included in the environmental control system according to the present disclosure.

The air conditioner body 1 can execute air-conditioning operation including cooling operation for blowing cooling air, heating operation for blowing warm air, and air-sending operation for blowing air of ambient temperature. The air conditioner body 1 according to the present embodiment can execute a work efficiency improvement operation for blowing air to a user.

The air conditioner body 1 includes a housing 30. The housing 30 of the air conditioner body 1 is formed into a rectangular parallelepiped box shape. A lower panel 31 having a rectangular shape is provided in a lower portion of the housing 30 of the air conditioner body 1. An air inlet 5 is formed in the lower panel 31. The air inlet 5 is an opening for taking air into the housing 30 from the outside. As an example, the air inlet 5 is arranged at a center of the lower panel 31.

Air outlets 20 are formed in the lower panel 31. The air outlet 20 is an opening for blowing air from the inside of the housing 30 to the outside. In the present embodiment, four air outlets 20 are formed in the lower panel 31, as an example. Each of the four air outlets 20 is provided along the corresponding side of the lower panel 31. The environmental control system according to the present embodiment includes the air conditioner body 1 in which a plurality of air outlets 20 are formed.

An outdoor unit is connected to the air conditioner body 1 via piping through which refrigerant flows. The piping and the outdoor unit are not illustrated in the present disclosure.

An air passage from the air inlet 5 to the air outlets 20 is formed in the housing 30. A heat exchanger 21 is provided in the air passage from the air inlet 5 to the air outlets 20. The heat exchanger 21 heats or cools air by heat exchange between the refrigerant and the air flowing through the air passage. Whether the air is heated or cooled by the heat exchanger 21 is determined by the type of air-conditioning operation executed by the air conditioner. The heat exchanger 21 adjusts the temperature and humidity of air by heating or cooling the air, and generates conditioned air. Specifically, the heat exchanger 21 heats the air during the heating operation. The heat exchanger 21 cools the air during the cooling operation. The air having passed through the heat exchanger 21 is generated as conditioned air of ambient temperature during the air-sending operation.

The air conditioner body 1 includes a fan 22 for blowing air from the air outlets 20. The fan 22 is provided in the air passage from the air inlet 5 to the air outlets 20. The fan 22 generates an airflow from the air inlet 5 to the air outlets 20.
When the fan 22 operates, the air is sucked through the air inlet 5, and is blown from the air outlets 20.

In the present embodiment, the air conditioner body 1 includes, as an example, one fan 22 that can send the airflow to the plurality of air outlets 20. Note that the first air conditioner body included in the environmental control system according to the present disclosure may include a plurality of fans 22.

As illustrated in Figs. 1, 2, and 3, the air conditioner body 1 includes up-and-down louvers 2 and left-and-right louvers 4. The up-and-down louver 2 and the left-and-right louver 4 are provided in each of the plurality of air outlets 20. The up-and-down louver 2 is configured to adjust a blowing angle in an up-and-down direction of the air to be blown from the air outlet 20. The left-and-right louver 4 is configured to adjust a blowing angle in a left-and-right direction of the air to be blown from the air outlet 20. The air conditioner body 1 can send the air in various directions by changing a combination between orientation of the up-and-down louver 2 and orientation of the left-and-right louver 4.

In the present embodiment, the up-and-down louver 2 is configured to allow the air outlets 20 to be closed. In the state illustrated in Fig. 1, the air outlets 20 are closed by the respective up-and-down louvers 2. In the air conditioner body 1 according to the present embodiment, some air outlets 20 of the plurality of air outlets 20 can be closed by the up-and-down louvers 2, to thereby stop air sending from those air outlets 20.

As illustrated in Fig. 1, in the present embodiment, a surface temperature sensor 3 is attached to the lower panel 31. The surface temperature sensor 3 can detect a surface temperature of an object in a target area in a non-contact manner.

The surface temperature sensor 3 scans inside of a target area to obtain surface temperature distribution data of the inside of the target area. The surface temperature distribution data is also referred to as heat image data. The detected surface temperature distribution data acquired by the surface temperature sensor 3 is processed by a controller section 6 or the like, which will be described later. This makes it possible to detect a position of the human body that is present in the target area. The surface temperature sensor 3 in the present embodiment constitutes an example of a human body detector for detecting a human body.

Note that a method of detecting a human body in the target area is not limited to a method performed by obtaining heat image data using the surface temperature sensor 3. In the present disclosure, a human body may be detected by, for example, obtaining actual image data using a camera and processing the obtained actual image data. The human body detector according to the present disclosure is not limited to the surface temperature sensor 3, and may be constituted by the above-described camera, another human sensor provided in the target area, a wearable sensor to be worn by a user, or the like. An apparatus such as the surface temperature sensor 3 or the camera constituting the human body detector according to the present disclosure may be provided outside the air conditioner body 1.

Fig. 4 is a block diagram illustrating a control system of the environmental control system of Embodiment 1. The environmental control system of the present embodiment includes the controller section 6 and a control circuit substrate 11. The controller section 6 and the control circuit substrate 11 are included, as an integrated device, in the air conditioner body 1. Alternatively, the controller section 6 and the control circuit substrate 11 may be provided as an external device of the air conditioner body 1. One of the controller section 6 and the control circuit substrate 11 may be provided in the air conditioner body 1 and the other may be provided as the external device. The controller section 6 and the control circuit substrate 11 constitute an example of a system controller according to the present disclosure.

The controller section 6 processes the surface temperature distribution data output from the surface temperature sensor 3. The controller section 6 includes, for example, an information obtaining unit 7 and a human position determination unit 8.

The information obtaining unit 7 obtains the surface temperature distribution data output from the surface temperature sensor 3. The human position determination unit 8 determines a position of a human body in the target area on a basis of the surface temperature distribution data obtained by the information obtaining unit 7. The human position determination unit 8 determines a position of a human body from a difference in the surface temperature, a distribution shape of the surface temperature and the like.

The environmental control system according to the present embodiment may include a temperature sensor 3a for detecting a room temperature of the target area. The data of the room temperature detected by the temperature sensor 3a is obtained by the information obtaining unit 7. The controller section 6 may include a room temperature determination unit 9. The room temperature determination unit 9 determines whether the room temperature becomes a set temperature of the air conditioner, on the basis of the data of the room temperature obtained by the information obtaining unit 7. The air conditioner constituting the environmental control system according to the present embodiment may be configured to perform an air-conditioning operation on the basis of the determination result of the room temperature determination unit 9.

A control circuit for controlling the entire operation of the air conditioner body 1 is mounted on the control circuit substrate 11. The control circuit substrate 11 includes, for example, an information processing unit 12, a controller 13, an airflow direction controller 14, an air volume controller 15, and an air outlet opening and closing controller 16.

The airflow direction controller 14 controls the operation of an airflow direction adjusting unit 17 included in the air conditioner body 1 to thereby control an airflow direction of air blown from each air outlet 20. The airflow direction adjusting unit 17 is configured to adjust an airflow direction of air blown from each air outlet 20. The airflow direction adjusting unit 17 specifically includes devices such as the up-and-down louvers 2, the left-and-right louvers 4, and a motor (not illustrated) for operating each louver.

The air volume controller 15 controls the operation of an air volume adjusting unit 18 included in the air conditioner body 1 to thereby control the air volume and airflow speed of air blown from each air outlet 20. The air volume adjusting unit 18 is configured to adjust the air volume and airflow speed of air blown from each air outlet 20. The air volume adjusting unit 18 specifically includes devices such as the fan 22, and a motor (not illustrated) for driving the fan 22.

The air outlet opening and closing controller 16 controls the operation of an air outlet opening and closing unit 19 included in the air conditioner body 1 to thereby open and close the air outlets 20. The air outlet opening and closing unit 19 is configured to open and close any of the plurality of air outlets 20. The air outlet opening and closing unit 19 specifically includes devices such as the up-and-down louvers 2 and a motor (not illustrated) for driving the up-and-down louvers 2. Alternatively, the air outlet opening and closing unit 19 may include, for example, members different from the up-and-down louver 2. The air conditioner body 1 may include members for opening and closing the air outlets 20 in addition to the up-and-down louvers 2 for adjusting the airflow direction.

The information processing unit 12 determines control contents of the air conditioner body 1 on the basis of the information about the position of the human body detected by the surface temperature sensor 3 and the controller section 6. The controller 13 outputs a specific control command to the airflow direction controller 14, the air volume controller 15, and the air outlet opening and closing controller 16 according to the control contents determined by the information processing unit 12. The airflow direction controller 14, the air volume controller 15, and the air outlet opening and closing controller 16 control the operations of the airflow direction adjusting unit 17, the air volume adjusting unit 18, and the air outlet opening and closing unit 19 according to the control command from the controller 13.

The information processing unit 12 has, as a specific function, a function of determining the control contents of the air conditioner body 1 according to a distance from a human body to the air conditioner body 1. In the present disclosure, the distance from a human body to the air conditioner body 1 is defined as a distance from the human body to a reference point of the air conditioner body 1. The reference point is set as, for example, a center of the air conditioner body 1. Alternatively, the reference point may be set as a position of the air outlet 20 closest to the human body. The above-described reference point may be set at any position according to the specifications of the human body detector such as the surface temperature sensor 3.

Fig. 5 is a diagram illustrating an example of a configuration for implementing the functions of a system controller according to the present disclosure. The functions of the controller section 6 and the control circuit substrate 11 that constitute an example of the system controller are implemented by a processing circuit, for example. The processing circuit may be dedicated hardware 40. The processing circuit may include a processor 41 and a memory 42. A part of the processing circuit is formed as the dedicated hardware 40, and the processing circuit may further include the processor 41 and the memory 42. In the example illustrated in Fig. 5, a part of the processing circuit is formed as the dedicated hardware 40. In the example illustrated in Fig. 5, the processing circuit further includes the processor 41 and the memory 42.

The processing circuit, a part of which is at least one piece of dedicated hardware 40, is, for example, a single circuit, a complex circuit, a programmed processor, a parallel programmed processor, an ASIC, an FPGA, or a combination thereof.

When the processing circuit includes at least one processor 41 and at least one memory 42, the functions of the controller section 6 and the control circuit substrate 11 is implemented by software, firmware, or a combination of software and firmware.

Software and firmware are written as programs and stored in the memory 42. The processor 41 reads out and executes the programs stored in the memory 42 to implement the functions of individual units. The processor 41 is also referred to as a central processing unit (CPU), a central processing unit, a processing unit, an arithmetic unit, a microprocessor, a microcomputer, or a DSP. The memory 42 is, for example, a non-volatile or volatile semiconductor memory such as a RAM, a ROM, a flash memory, an EPROM, and an EEPROM, or is, for example, a magnetic disk, a flexible disk, an optical disc, a compact disc, a mini disc, and a DVD.

In this manner, the processing circuit can implement the functions of the controller section 6 and the control circuit substrate 11 that constitute an example of the system controller, by hardware, software, firmware, or a combination thereof.

As described above, the air conditioner body 1 can execute a work efficiency improvement operation. The work efficiency improvement operation refers to an operation for blowing air toward a user, i.e., a human body. The work efficiency improvement operation can suppress a reduction in the work efficiency of the user or improve the work efficiency of the user. As an example, the air conditioner body 1 executes the air-sending operation to thereby blow air of the ambient temperature from the air outlet 20 toward the human body at the time of executing the work efficiency improvement operation.

Alternatively, the air conditioner body 1 may perform the cooling operation for blowing cooling air at the time of executing the work efficiency improvement operation. For example, in the case where the room temperature is below a predetermined temperature, the air conditioner body 1 may perform the heating operation for blowing warm air at the time of executing the work efficiency improvement operation. In the following, as an example, there will be described specific examples of the operations and controls of an air conditioner body 1 that performs the air-sending operation at the time of executing the work efficiency improvement operation, and the environmental control system including the air conditioner body 1.

In the present embodiment, the controller section 6 and the control circuit substrate 11 that constitute an example of the system controller execute a first control when a distance from a human body detected by the surface temperature sensor 3 to the air conditioner body 1 is a first distance. In addition, the controller section 6 and the control circuit substrate 11 execute a second control when a distance from a human body detected by the surface temperature sensor 3 to the air conditioner body 1 is a second distance larger than the above-described first distance.

The above-described first distance is less than a preset first threshold D1. The above-described second distance is equal to or larger than the first threshold D1. That is, the controller section 6 and the control circuit substrate 11 execute the first control when a distance from a human body detected by the surface temperature sensor 3 to the air conditioner body 1 is less than the first threshold D1. The controller section 6 and the control circuit substrate 11 execute the second control when a distance from a human body detected by the surface temperature sensor 3 to the air conditioner body 1 is equal to or larger than the first threshold D1.

When the above-described first control is executed, the air conditioner body 1 executes a first operation. Fig. 6 is diagram illustrating the first operation of the air conditioner body 1 of Embodiment 1. When the above-described second control is executed, the air conditioner body 1 executes a second operation. Fig. 7 is diagram illustrating the second operation of the air conditioner body 1 of Embodiment 1. In Figs. 6 and 7, each arrow indicates a flow of air blown by the air conditioner body 1.

As illustrated in Fig. 6, the first operation is an operation for blowing air from one air outlet 20 to a human body. When a plurality of workers are present in the target area, the air is blown toward each worker. At this time, as illustrated in Fig. 6, the air conditioner body 1 may blow air from the air outlet 20 closest to a human body toward the human body.

As illustrated in Fig. 7, the second operation is an operation for blowing air from at least two air outlets 20, i.e., a plurality of air outlets 20 toward a human body. In this way, the air conditioner body 1 included in the control system according to the present embodiment performs the second operation for blowing air from the plurality of air outlets 20 toward a human body far away from the air conditioner body 1 by the first threshold D1 or larger. According to the above-described second operation, the airflow of a sufficient strength can be directed toward a worker far away from the air conditioner body 1. In this way, the present embodiment can provide an environmental control system that can reliably achieve the effect of improving the work efficiency of a worker.

Note that, as illustrated in Fig. 7, the air conditioner body 1 may perform, in parallel, the first operation and the second operation. The air conditioner body 1 may blow air from one air outlet 20 toward a human body separated from the air conditioner body 1 by less than the first threshold D1 while blowing air from a plurality of air outlets 20 toward a human body far away from the air conditioner body 1 by the second distance equal to or larger than the first threshold D1. That is, the above-described first control and second control may be performed in parallel.

As illustrated in Fig. 7, the air conditioner body 1 may close at least one air outlet 20 when the second control is executed to execute the second operation. Closing at least one air outlet 20 makes it possible to increase the airflow speed of the air blown by the air conditioner body 1 without increasing the output of the fan 22. At this time, it is desirable that the air outlet 20 to be closed does not face a direction from the air conditioner body 1 toward a worker. It is desirable that the air outlet 20 to be closed is selected according to the position of the human body detected by the surface temperature sensor 3.

Fig. 8 is a diagram illustrating a first variant of the environmental control system of Embodiment 1. As illustrated in the variant of Fig. 8, an environmental control system of the present embodiment may further include an air conditioner body 1a different from the air conditioner body 1. The air conditioner body 1a corresponds to a second air conditioner body included in the environmental control system according to the present disclosure. Note that the second air conditioner body according to the present disclosure may have different specifications from those of the air conditioner body 1a. The second air conditioner body may include, for example, one air outlet.

The air conditioner body 1a has the same configuration as that of the air conditioner body 1, as an example. The operation of the air conditioner body 1a is controlled by a controller section 6 and a control circuit substrate 11 that constitute an example of the system controller as illustrated in Fig. 4, for example.

In the first variant illustrated in Fig. 8, the controller section 6 and the control circuit substrate 11 execute a third control when a distance from a human body detected by the surface temperature sensor 3 to the air conditioner body 1 is a third distance larger than the second distance. The above-described third distance is equal to or larger than a preset second threshold D2. In the first variant, the above-described second distance is less than the second threshold D2. The second threshold D2 is set as a value larger than the first threshold D1.

As illustrated in Fig. 8, when the third control is executed, both of the air conditioner body 1 and the air conditioner body 1a blow air toward a human body far away from the air conditioner body 1 by the second threshold D2 or larger. According to the first variant, air is sent from another air conditioner body 1a to a worker far away from the air conditioner body 1, which makes it possible to direct an airflow of a sufficient strength to the worker.

As described above, the air conditioner body 1a has the same configuration as that of the air conditioner body 1, as an example. At this time, the air conditioner body 1a may execute a first operation for blowing air from one air outlet 20 and a second operation for blowing air from a plurality of air outlets 20 in the same manner as in the air conditioner body 1. For example, the controller section 6 and the control circuit substrate 11 execute a first control when a distance from a human body to the air conditioner body 1a is a fourth distance, and execute a second control when a distance from a human body to the air conditioner body 1a is a fifth distance larger than the above-described fourth distance. The fourth distance is less than a preset third threshold D3. The fifth distance is equal to or larger than the third threshold D3. The air conditioner body 1a may execute a first operation when a distance from a human body to the air conditioner body 1a is less than the third threshold D3. The air conditioner body 1a may execute a second operation when a distance from a human body to the air conditioner body 1a is equal to or larger than the third threshold D3. Note that the third threshold D3 may be equal to or different from the first threshold D1.

When the air conditioner body 1a has the same configuration as that of the air conditioner body 1 as described above, the controller section 6 and the control circuit substrate 11 may execute the third control when a distance from a human body to the air conditioner body 1 is the third distance and a distance from the human body to the air conditioner body 1a is a sixth distance. The sixth distance is equal to or larger than the fourth threshold D4. In the present variant, the above-described fifth distance is less than the fourth threshold D4. That is, as illustrated in Fig. 8, the controller section 6 and the control circuit substrate 11 may execute the third control when a distance from a human body to the air conditioner body 1 is equal to or larger than the second threshold D2 and a distance from the human body to the air conditioner body 1a is equal to or larger than the fourth threshold D4. According to the present variant, the effect of more reliably improving the work efficiency of a worker can be obtained regardless of a position of the worker with respect to the air conditioner body 1 and the air conditioner body 1a. Note that the fourth threshold D4 may be equal to or different from the above-described second threshold D2.

As illustrated in Fig. 8, the air conditioner body 1 may close at least one air outlet 20 when the third control is executed. This makes it possible to increase the airflow speed of the air blown by the air conditioner body 1 without increasing the output of the fan 22, in the same manner as in the example illustrated in Fig. 7. It is desirable that the air outlet 20 to be closed does not face a direction from the air conditioner body 1 toward a worker. The air conditioner body 1a having the same configuration as that of the air conditioner body 1 may close at least one air outlet 20 when the third control is executed.

Fig. 9 is a diagram illustrating a second variant of the environmental control system of Embodiment 1. In the second variant, a value of the above-described first threshold D1 is variable depending on a position of a human body with respect to the air conditioner body 1. Specifically, in the case where an apparent area of an air outlet 20 closest to a human body when the air outlet 20 is viewed from the human body is a first area, the first threshold D1 is set to be smaller as compared to the case where an apparent area of an air outlet 20 closest to a human body when the air outlet 20 is viewed from the human body is a second area larger than the first area.

Fig. 9(a) illustrates a state in which an apparent area of an air outlet 20 closest to a human body when the air outlet 20 is viewed from the human body is the second area larger than the first area. That is, the state means a state in which a human body is present within a predetermined angle range A with respect to the front direction of the air outlet 20. The angle range A is set with respect to the center of the air outlet 20 or the center of the air conditioner body 1, for example.

On the other hand, Fig. 9(b) illustrates a state in which an apparent area of an air outlet 20 closest to a human body when the air outlet 20 is viewed from the human body is the first area smaller than the second area. That is, the state means a state in which a human body is present outside the above-described angle range A with respect to the front direction of the air outlet 20. A first threshold D1 in the state of Fig. 9(b) is set to be smaller than the first threshold D1 in the state of Fig. 9(a). According to the second variant illustrated in Fig. 9, when a worker is present at a position on a left or right side with respect to the front direction of the air outlet 20 or at a place where an airflow from the air outlet 20 is hard to reach, the first threshold D1 is reduced, which makes it possible to direct the airflow of a sufficient strength toward the worker.

Note that the first threshold D1 may change discontinuously depending on whether a human body is present within the predetermined angle range A as described above or may change continuously depending on a position of a human body with respect to the front direction of the air outlet 20. For example, the first threshold D1 may change continuously depending on the magnitude of the apparent area of an air outlet 20 closest to a human body when the air outlet 20 is viewed from the human body. In addition, in the case where an apparent area of an air outlet 20 closest to a human body when the air outlet 20 is viewed from the human body is a first area, the second threshold D2 may be also set to be smaller as compared to the case where an apparent area of an air outlet 20 closest to a human body when the air outlet 20 is viewed from the human body is a second area larger than the first area, in the same manner as the first threshold D1. The second threshold D2 in the state of Fig. 9(b) is set to be smaller than the second threshold D2 in the state of Fig. 9(a).

Fig. 10 is a flowchart illustrating an operation example of the environmental control system of Embodiment 1. As an example, the environmental control system first obtains a room temperature from the temperature sensor 3a, the information obtaining unit 7, and the like (step S101). Next, the environmental control system obtains positional information of a worker from the surface temperature sensor 3, the information obtaining unit 7, and the like (step S102).

Next, it is determined whether a room temperature has reached a target temperature, on the basis of the information about the room temperature obtained in step S101 (step S103). The target temperature is set according to the set temperature of the air conditioner body constituting the environmental control system, and the like. When the room temperature does not reach the target temperature, the cooling operation or the heating operation is executed by the air conditioner body 1 according to the room temperature (step S104). The processing from step S101 to step S104 is continued until the room temperature reaches the target temperature.

When the room temperature reaches the target temperature, the work efficiency improvement operation is executed by the air conditioner body 1. At this time, the first threshold D1 and the second threshold D2 that are thresholds of a distance may be set according to the positional information of the worker obtained in step S102 (step S105). The first threshold D1 and the second threshold D2 are set as in the example of Fig. 9, for example.

At the time of executing the work efficiency improvement operation, the control contents of the operation of the air conditioner body 1 are determined on the basis of the positional information of the worker, the first threshold D1, the second threshold D2, and the like (step 106). The controller section 6 and the control circuit substrate 11 that constitute an example of the system controller appropriately executes the above-described first control, second control or third control on the basis of the positional information of the worker, the first threshold D1, the second threshold D2, and the like. The air-sending operation is performed by the air conditioner body 1 according to the control contents of the controller section 6 and the control circuit substrate 11 (step S107). In this manner, the airflow can be provided to the worker. Note that the flowchart in Fig. 10 is merely an example of the operation, and an operational flow of the environmental control system according to the present disclosure is not limited to this example.

As described above, Embodiment 1 and each variant can provide an environmental control system that can reliably achieve the effect of improving the work efficiency of a worker.

### Embodiment 2.

Next, Embodiment 2 will be described. As for the same or equivalent components as or to those in Embodiment 1, the description is simplified or omitted. Hereinafter, the description will be made mainly focusing on differences from Embodiment 1.

Fig. 11 is a diagram illustrating an operation of an environmental control system of Embodiment 2. The environmental control system according to the present embodiment includes an air conditioner body 1 which is an example of a first air conditioner body in the same manner as in Embodiment 1. The air conditioner body 1 executes a work efficiency improvement operation for blowing air from an air outlet 20 toward a human body.

In the present embodiment, a controller section 6 and a control circuit substrate 11 that constitute an example of the system controller execute a first control when a distance from a human body detected by a surface temperature sensor 3 to the air conditioner body 1 is a first distance. In addition, the controller section 6 and the control circuit substrate 11 execute a second control when a distance from a human body detected by the surface temperature sensor 3 to the air conditioner body 1 is a second distance larger than the above-described first distance. The first distance is less than a first threshold D1, and the second distance is equal to or larger than the first threshold D1. The first threshold D1 is a threshold of a distance in the same manner as in Embodiment 1.

The first control in the present embodiment is different from the first control in Embodiment 1. Similarly, the second control in the present embodiment is different from the second control in Embodiment 1. Specifically, the air conditioner body 1 blows air at a first airflow speed toward the human body detected by the surface temperature sensor 3 which is an example of the human body detector, when the first control is executed. The air conditioner body 1 blows air at a second airflow speed toward the human body detected by the surface temperature sensor 3, the second airflow speed being greater than the first airflow speed, when the second control is executed. That is, the air conditioner body 1 of the present embodiment blows air at greater second airflow speed toward a human body far away from the air conditioner body 1 by the first threshold D1 or larger. This can reliably achieve the effect of improving the work efficiency of a worker far away from the air conditioner body 1.

Furthermore, in the present embodiment, the air conditioner body 1 closes at least one air outlet 20 when the second control is executed. This enables the air conditioner body 1 to blow stronger air. Note that it is desirable that the air outlet 20 to be closed does not face a direction from the air conditioner body 1 toward a worker. Embodiment 3.

Next, Embodiment 3 will be described. As for the same or equivalent components as or to those in each embodiment as described above, the description is simplified or omitted. Hereinafter, the description will be made mainly focusing on differences from each embodiment as described above.

Fig. 12 is a diagram illustrating an operation of an environmental control system of Embodiment 3. The environmental control system according to the present embodiment includes an air conditioner body 1 and an air conditioner body 1a in the same manner as in the first variant illustrated in Fig. 8 in Embodiment 1. The air conditioner body 1 and the air conditioner body 1a execute a work efficiency improvement operation for blowing air toward a human body. Note that in the present embodiment, the air conditioner body 1 which is an example of the first air conditioner body may include one air outlet. Similarly, the air conditioner body 1a which is an example of the second air conditioner body may also include one air outlet.

In the present embodiment, a controller section 6 and a control circuit substrate 11 that constitute an example of the system controller execute a first control when a distance from a human body detected by a surface temperature sensor 3 to the air conditioner body 1 is a first distance. In addition, the controller section 6 and the control circuit substrate 11 execute a second control when a distance from a human body detected by the surface temperature sensor 3 to the air conditioner body 1 is a second distance larger than the above-described first distance. The first distance is less than a first threshold D1, and the second distance is equal to or larger than the first threshold D1. The first threshold D1 is a threshold of a distance in the same manner as in Embodiment 1.

The first control in the present embodiment is different from the first controls in Embodiment 1 and Embodiment 2. Similarly, the second control in the present embodiment is different from the second controls in Embodiment 1 and Embodiment 2. Specifically, the air conditioner body 1 blows air toward the human body detected by the surface temperature sensor 3 which is an example of the human body detector, when the first control is executed. That is, the air is blown from the air conditioner body 1 toward the human body separated from the air conditioner body 1 by less than the first threshold D1.

On the other hand, both of the air conditioner body 1 and the air conditioner body 1a blow air toward the human body detected by the surface temperature sensor 3, when the second control is executed. According to the present embodiment, the air is sent from another air conditioner body 1a to a worker far away from the air conditioner body 1, which makes it possible to direct an airflow of a sufficient strength to the worker. Note that the air outlets 20 that do not face a direction from the air conditioner body 1 toward a worker may be closed as illustrated in Fig. 12, in the same manner as in Embodiment 1 and Embodiment 2.

The air conditioner body 1a has the same configuration as that of the air conditioner body 1, as an example. At this time, in the air conditioner body 1a, a third threshold D3 may be set in the same manner as in the first variant illustrated in Fig. 8 in Embodiment 1. At this time, the controller section 6 and the control circuit substrate 11 may execute the above-described second control when a distance from a human body to the air conditioner body 1 is equal to or larger than the first threshold D1 and a distance from the human body to the air conditioner body 1a is equal to or larger than the third threshold D3. According to this example, the airflow of a sufficient strength can be directed toward a worker positioned far away from both of the air conditioner body 1 and the air conditioner body 1a.

### Embodiment 4.

Next, Embodiment 4 will be described. As for the same or equivalent components as or to those in each embodiment as described above, the description is simplified or omitted. Hereinafter, the description will be made mainly focusing on differences from each embodiment as described above.

Fig. 13 is a diagram illustrating an operation of an environmental control system of Embodiment 4. The environmental control system according to the present embodiment includes an air conditioner body 1 and an air conditioner body 1a in the same manner as in Embodiment 3. The air conditioner body 1 and the air conditioner body 1a execute a work efficiency improvement operation for blowing air toward a human body. The air conditioner body 1 which is an example of the first air conditioner body may include one air outlet. Similarly, the air conditioner body 1a which is an example of the second air conditioner body may also include one air outlet.

The air conditioner body 1 is configured to allow air to be blown toward a first area. The air conditioner body 1 is provided to blow air to a worker in the first area. The air conditioner body 1a is configured to allow air to be blown toward a second area different from the first area. The air conditioner body 1a is provided to blow air to a worker in the second area.

In the present embodiment, a surface temperature sensor 3 which is an example of the human body detector can detect human bodies that are present in the first area and the second area. A controller section 6 is configured to determine the number of human bodies in the first area and the number of human bodies in the second area, the human bodies being detected by the surface temperature sensor 3. The determination function is provided in a human position determination unit, for example. The controller section 6 and a control circuit substrate 11 that constitute an example of the system controller control the air conditioner body 1 and the air conditioner body 1a according to the number of human bodies in the first area and the number of human bodies in the second area.

Specifically, the controller section 6 and a control circuit substrate 11 cause the air conditioner body 1 and the air conditioner body 1a to blow air toward the human bodies in the first area when the number of human bodies in the first area is equal to or larger than a reference value and the number of human bodies in the second area is less than a reference value. Note that the above-described two reference values may be equal to or different from each other. According to the present embodiment, the strong airflow can be provided to a space in which many workers are present.

### Industrial Applicability

The environmental control system according to the present disclosure can be used to improve the work efficiency of a worker in a work space such as an office in which an air conditioner is provided, for example.

### Reference Signs List

1 Air conditioner body
1a Air conditioner body
2 Up-and-down louver
3 Surface temperature sensor
3a Temperature sensor
4 Left-and-right louver
5 Air inlet
6 Controller section
7 Information obtaining unit
8 Human position determination unit
9 Room temperature determination unit
11 Control circuit substrate
12 Information processing unit
13 Controller
14 Airflow direction controller
15 Air volume controller
16 Air outlet opening and closing controller
17 Airflow direction adjusting unit
18 Air volume adjusting unit
19 Air outlet opening and closing unit
20 Air outlet
21 Heat exchanger
22 Fan
30 Housing
31 Lower panel
40 Dedicated hardware
41 Processor
42 Memory

## Claims

1. An environmental control system comprising:
a first air conditioner body having a plurality of air outlets;
a human body detector for detecting a human body; and
a system controller for controlling the first air conditioner body,
the system controller executes a first control when a distance from a human body detected by the human body detector to the first air conditioner body is a first distance, and executes a second control when a distance from a human body detected by the human body detector to the first air conditioner body is a second distance larger than the first distance,
the first air conditioner body blows air from one of the air outlets toward the human body detected by the human body detector when the first control is executed, and blows air from at least two of the air outlets toward the human body detected by the human body detector when the second control is executed.

2. The environmental control system according to claim 1, further comprising:
a second air conditioner body,
wherein the system controller executes a third control when a distance from a human body detected by the human body detector to the first air conditioner body is a third distance larger than the second distance, and
the first air conditioner body and the second air conditioner body blow air toward the human body detected by the human body detector when the third control is executed.

3. The environmental control system according to claim 1 or 2, wherein
the first air conditioner body comprises one fan for sending an airflow to the plurality of the air outlets, and closes at least one of the air outlets when the second control is executed.

4. The environmental control system according to claim 2, wherein
the first air conditioner body comprises one fan for sending an airflow to the plurality of the air outlets, and closes at least one of the air outlets when the third control is executed.

5. The environmental control system according to any one of claims 1 to 4, wherein the first distance is less than a first threshold,
the second distance is equal to or larger than the first threshold, and
in a case where an apparent area of the air outlet closest to a human body detected by the human body detector when the air outlet is viewed from the human body is a first area, the first threshold is set to be smaller as compared to a case where an apparent area of the air outlet closest to a human body detected by the human body detector when the air outlet is viewed from the human body is a second area larger than the first area.

6. The environmental control system according to claim 2 or 4, wherein
the first distance is less than a first threshold,
the second distance is equal to or larger than the first threshold and less than a second threshold,
the third distance is equal to or larger than the second threshold, and
in a case where an apparent area of the air outlet closest to a human body detected by the human body detector when the air outlet is viewed from the human body is a first area, the first threshold and the second threshold are set to be smaller as compared to a case where an apparent area of the air outlet closest to a human body detected by the human body detector when the air outlet is viewed from the human body is a second area larger than the first area.

7. An environmental control system, comprising:
a first air conditioner body having a plurality of air outlets, and one fan for sending an airflow to the plurality of air outlets;
a human body detector for detecting a human body; and
a system controller for controlling the first air conditioner body,
the system controller executes a first control when a distance from a human body detected by the human body detector to the first air conditioner body is a first distance, and executes a second control when a distance from a human body detected by the human body detector to the first air conditioner body is a second distance larger than the first distance,
the first air conditioner body blows air at a first airflow speed toward the human body detected by the human body detector when the first control is executed, and closes at least one of the air outlets and blows air at a second airflow speed toward the human body detected by the human body detector, the second airflow speed being greater than the first airflow speed, when the second control is executed.

8. An environmental control system, comprising:
a first air conditioner body;
a second air conditioner body;
a human body detector for detecting a human body; and
a system controller for controlling the first air conditioner body and the second air conditioner body,
the system controller executes a first control when a distance from a human body detected by the human body detector to the first air conditioner body is a first distance, and executes a second control when a distance from a human body detected by the human body detector to the first air conditioner body is a second distance larger than the first distance,
the first air conditioner body blows air toward the human body detected by the human body detector when the first control is executed, and the first air conditioner body and the second air conditioner body blow air toward the human body detected by the human body detector when the second control is executed.

9. An environmental control system, comprising:
a first air conditioner body capable of blowing air toward a first area;
a second air conditioner body capable of blowing air toward a second area different from the first area;
a human body detector for detecting human bodies that are present in the first area and the second area; and
a system controller for controlling the first air conditioner body and the second air conditioner body according to the number of human bodies in the first area and the number of human bodies in the second area, the human bodies being detected by the human body detector,
the system controller causes the first air conditioner body and the second air conditioner body to blow air toward the human body in the first area when the number of human bodies in the first area is equal to or larger than a reference value and the number of human bodies in the second area is less than a reference value.
